(19) Europäisches Patentamt / European Patent Office / Office européen des brevets

(11) **EP 4 737 861 A2**

(12) **EUROPEAN PATENT APPLICATION**

(43) Date of publication:
06.05.2026 Bulletin 2026/19

(21) Application number: 25211944.1

(22) Date of filing: **29.10.2025**

(51) International Patent Classification (IPC):
*G01C 21/36* (2006.01)    *G01C 21/00* (2006.01)
*B60W 60/00* (2020.01)    *G06V 10/80* (2022.01)

(52) Cooperative Patent Classification (CPC):
**G01C 21/3819; B60W 60/00; G01C 21/3658;
G06V 10/80**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.11.2024   CN 202411554113**

(71) Applicant: **Robert Bosch GmbH
70442 Stuttgart (DE)**

(72) Inventors:
• **WANG, Leichen
Shanghai 200335 (CN)**
• **LI, Xinrun
Shanghai 200335 (CN)**

(54) **METHOD AND APPARATUS, CONTROLLER, AND COMPUTER PROGRAM PRODUCT FOR LANE FUSION**

(57) Examples of the present disclosure relate to a method and an apparatus, a controller, and a computer program product for lane fusion. The method includes determining a map boundary of at least one lane corresponding to a target road section based on map data. The method further comprises obtaining a sensing boundary for the at least one lane based on sensing data from at least one sensor. The method further comprises identifying an abnormal boundary of the target road section based on a match of the map boundary to the sensing boundary. In this way, not only can the matching between map data with different data structures or representations and the sensing data be efficiently processed, but also can the matching results be used to identify the abnormal boundaries that may be present in the map data and the sensing data, thereby promoting performance improvements in driving functionality and facilitating more rational and safe driving decisions for vehicles.

Figure 2

**Description**

Technical Field

Embodiments of the present disclosure relate generally to the field of driving, and in particular, to a method and an apparatus, a controller, and a computer program product for lane fusion.

Background

Accurate modeling of complex traffic scenes is not only a key step in achieving accurate planning and effective control of driving systems (such as autonomous driving (AD systems) and advanced driving assistance systems (ADAS)), but also an important foundation for improving road safety and reducing the risk of traffic accidents, etc.

In order to keep the vehicle moving in the correct position, a lane detection function is provided, with an intention to identify and track markings in the road to achieve accurate navigation and safe driving of the vehicle. There are a variety of detection and sensing methods, such as camera-based lane detection, and laser radar (LiDAR)-based lane detection.

Summary of the Invention

Embodiments of the present disclosure provide a method and an apparatus, a controller, and a computer program product for lane fusion.

A first aspect of the present disclosure provides a method for lane fusion. The method includes determining a map boundary of at least one lane corresponding to a target road section based on map data. The method further includes obtaining a sensing boundary for the at least one lane based on sensing data from at least one sensor. The method further includes identifying an abnormal boundary of the target road section based on a match of the map boundary to the sensing boundary.

A second aspect of the present disclosure provides an apparatus for lane fusion. The apparatus includes a map boundary determination module configured to determine a map boundary of at least one lane corresponding to a target road section based on map data. The apparatus further includes a sensing boundary acquisition module, which is configured to acquire a sensing boundary for the at least one lane based on sensing data from at least one sensor. The apparatus further includes a boundary matching module configured to identify an abnormal boundary of the target road section based on a match of the map boundary to the sensing boundary.

A third aspect of the present disclosure provides a controller. The controller includes at least one processor. The controller further includes a memory coupled to the at least one processor and having instructions stored thereon that, when executed by the at least one processor, cause a device to execute the steps of the method according to the first aspect of the present disclosure.

A fourth aspect of the present disclosure provides a vehicle. The vehicle includes the controller according to the third aspect of the present disclosure.

A fifth aspect of the present disclosure provides a computer program product, which is tangibly stored on a computer-readable medium and includes computer-executable instructions that, when executed by a processor of a computer, cause the computer to execute the steps of the method according to the first aspect of the present disclosure.

A sixth aspect of the present disclosure provides a machine-readable storage medium having instructions stored thereon that, when executed by a processor, cause the machine to execute the steps of the method according to the first aspect of the disclosure.

Brief Description of the Drawings

The above-described and other purposes, features, and advantages of the present disclosure will become clearer by more detailed description of the exemplary embodiments of the present disclosure in conjunction with the accompanying drawings. In illustrative embodiments of the present disclosure, the same or similar reference numerals generally represent the same or similar parts, components, etc.

FIG. 1 illustrates a schematic diagram of an exemplary environment in which the method and/or device according to embodiments of the present disclosure may be implemented.
FIG. 2 illustrates a flow chart of a method for lane fusion according to embodiments of the present disclosure;
FIG. 3 illustrates a diagram of a lane fusion process according to embodiments of the present disclosure;
FIG. 4 illustrates a diagram of an example data representation utilizing out-of-bounds boundary map data and sensing data according to embodiments of the present disclosure;
FIG. 5 illustrates a diagram of a process for out-of-bounds boundary acquisition according to embodiments of the present disclosure;

FIG. 6 illustrates a schematic diagram of a boundary topology process according to embodiments of the present disclosure;

FIG. 7 illustrates a schematic diagram of a constructed boundary topology according to embodiments of the present disclosure;

FIG. 8 illustrates a schematic diagram of a multi-modal fusion process according to embodiments of the present disclosure;

FIG. 9 illustrates a schematic diagram of an abnormal boundary identification process based on multi-modal sensing data according to embodiments of the present disclosure;

FIG. 10 shows a schematic diagram of an apparatus for lane fusion according to embodiments of the present disclosure; and

FIG. 11 illustrates a schematic block diagram of an exemplary device suitable for implementing an embodiment of the present disclosure.

In the various accompanying drawings, the same or corresponding numbers represent the same or corresponding portions.

Detailed Description of the Embodiments

The examples of the present disclosure will be described in further detail below with reference to the accompanying drawings. While certain examples of the present disclosure are illustrated in the accompanying drawings, it should be understood that the present disclosure may be implemented in various forms and should not be construed as being limited to the examples set forth herein. Rather, these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and its variations should be understood as open-ended inclusion; that is, "comprising but not limited to." The term "based on" shall be understood as "based at least in part on." The term "one example" or "the example" should be understood as "at least one example." The term "first," "second," etc. may refer to different or the same objects unless expressly indicated otherwise. As noted above, driving systems such as AD and ADAS systems provide lane detection functionality to enable accurate navigation and safe driving of vehicles. However, map data, such as high definition (HD) maps, is not always accurate and up-to-date (e.g., due to a temporary road closure, etc.). Moreover, a camera-based sensing or perception, for example, cannot detect which direction to travel when entering an intersection without any visible road lines. Due to the limitations of a single input in a complex traffic environment and the potential for instability and error, it is necessary to integrate data from different sources.

On the other hand, lane fusion task is also very challenging, and one of the reasons is that sensing data and map data cannot be aligned with each other due to their respective characteristics, such as different data structures or representations. In particular, each sensor (e.g., in-vehicle sensor, etc.) is capable of detecting road markings at lane boundaries. At the same time, the HD map service also provides corresponding map data for the ADAS system. However, it is difficult for the fusion process to correctly associate the results of different inputs. For example, each sensor may only sense a portion of a boundary, or the sensing results overlap in certain areas. Moreover, maps (such as HD maps) provide an entire lane model, but the maps differ from the data structure of the sensing results. In some cases, if the perceived result is inaccurate, the fusion process needs to handle abnormal results. For example, abnormal results such as false positive results should be filtered out, false negative results should be compensated, and the like.

To this end, embodiments of the present disclosure provide a scheme for lane fusion. The scheme for lane fusion in accordance with the embodiments of the present disclosure includes determining a map boundary of at least one lane corresponding to a target road section based on map data. The scheme further includes obtaining a sensing boundary for the at least one lane based on sensing data from at least one sensor. The scheme further includes identifying an abnormal boundary of the target road section based on a match of the map boundary to the sensing boundary. In this way, not only can the matching between map data with different data structures or representations and the sensing data be efficiently processed, but also can the matching results be used to identify the abnormal boundaries that may be present in the map data and the sensing data, thereby promoting performance improvements in driving functionality and facilitating more rational and safe driving decisions for vehicles.

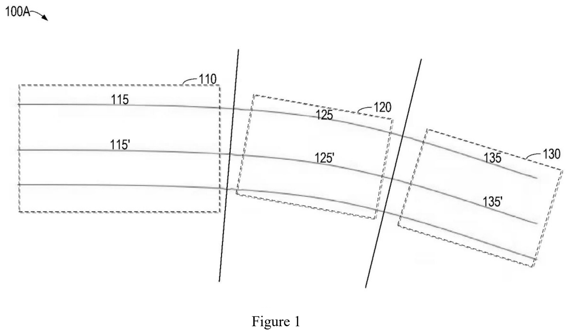

Basic principles and several exemplary implementations of the present disclosure are described below with reference to FIG. 1A to FIG. 11. It will be understood that these exemplary examples are given only to enable those skilled in the art to better understand and thereby achieve the example of the present disclosure and not to limit the scope of the present disclosure in any way.

FIG. 1A illustrates a schematic diagram of a schematic representation 100A of map data. The map data may include road sections, lanes, boundaries, etc. Examples of maps may include HD maps that are typically used for autonomous driving, which provide detailed road information, as well as key data such as traffic signs and signal light positions, to help ensure that autonomous vehicles can be navigated safely and efficiently. Other types of maps are possible as well, serving different application scenarios and needs.

FIG. 1A illustrates data structures for different levels of the map data with HD maps as an example, with three road sections, namely, road sections 110, 120, and 130, schematically illustrated. Each lane of a plurality of lanes in FIG. 1A is defined by two side boundaries for vehicles to travel through. For example, one side boundary of the lane is 115, 125, and 135, and the other side boundary of the lane is 115', 125', and 135', and the two side boundaries collectively define the upper lane in FIG. 1A. It should be understood that the schematic representation 100A exemplarily illustrated in FIG. 1A is for illustrative purposes only and is exemplary and non-limiting.

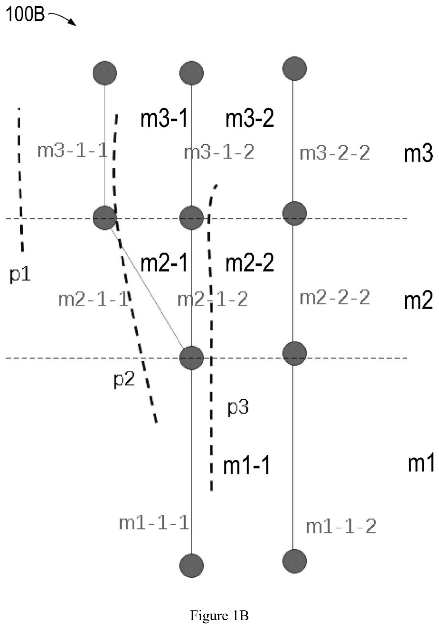

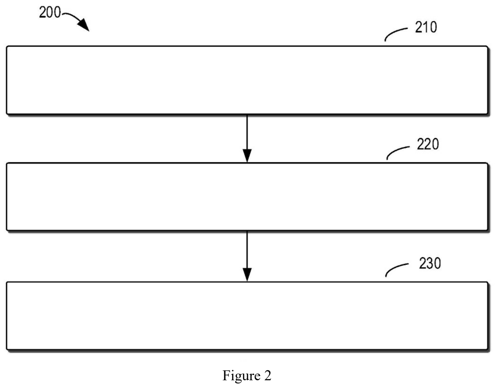

FIG. 1B illustrates a schematic diagram of an example data representation 110B of map data and sensing data. As shown in FIG. 1B, the map data and the sensing data have different data structures and representations. The map data describes three road sections (m1, m2, m3), five lanes (m1-1, m2-1, m2-2, m3-1, m3-2) and eight boundaries (m1-1-1, m1-1-2, m2-1-1, m2-1-2, m2-2-2, m3-1-1, m3-1-2, m3-2-2) (illustrated by solid lines in FIG. 1B). For example, m1-1-1 represents a first road section, a first lane, and a left boundary. In FIG. 1B, sensing boundaries p1, p2, and p3 in the sensing data (illustrated by thick dashed lines in FIG. 1B) may come from sensing results of the sensor for the road, which do not have any road sections and lane data structures. Here, the sensor may be, for example, but not limited to, one of the following sensors of the vehicle: a front camera based sensor, a rear camera based sensor, a LiDAR sensor, and a radar sensor. It will be understood that although FIG. 1B only shows sensing data from a single sensor, embodiments of the present disclosure may incorporate sensing data from multiple sensors to provide robust and accurate analysis results. The characteristics of map data and sensing data, which may have different data structures and representations, are described above in connection with FIGS. 1A and 1B. To fuse data from different sources and that may have different data structures or representations, a flow chart of a method 200 for lane fusion, in accordance with an embodiment of the present disclosure, will be described below in connection with FIG. 2. Through the method 200, not only can the matching between map data with different data structures or representations and the sensing data be efficiently processed, but also can the matching results be used to identify the abnormal boundaries that may be present in the map data and the sensing data, thereby promoting performance improvements in driving functionality and facilitating more rational and safe driving decisions for vehicles.

FIG. 2 illustrates a flow chart of the method 200 for lane fusion according to embodiments of the present disclosure. At block 210, a map boundary of at least one lane corresponding to a target road section is determined based on map data. As described above, the map data may include road sections (e.g., m1, m2, and m3 shown in FIG. 1B), lanes (e.g., m1-1, m2-1, m2-2, m3-1, and m3-2 shown in FIG. 1B) and boundaries (e.g., m1-1-1, m1-1-2, m2-1-1, m2-1-2, m2-2-2, m3-1-1, m3-1-2, and m3-2-2 shown in FIG. 1B). After a road section of interest is identified (hereinafter, may be referred to as a target road section), a lane corresponding to the target road section is determined and boundaries of these lanes are determined. The lane boundaries of the target road section may be represented using a data structure. In some embodiments, the boundary of a side of the lane corresponding to the target road section may be processed as a whole unit. In the following, this data structure in accordance with embodiments of the present disclosure will be described in further detail.

At block 220, a sensing boundary for the at least one lane is acquired based on sensing data from at least one sensor. One or more in-vehicle sensors, such as a front camera based sensor, a rear camera based sensor, and a LiDAR sensor, may be used to sense the road. Collected sensing data may be used in edge detection algorithms after data preprocessing such that the sensed lane boundary is identified from the preprocessed data.

At block 230, an abnormal boundary of the target road section is identified based on a match of the map boundary to the sensing boundary. The lane boundary of the map determined at 210 is matched with the corresponding sensed lane boundary acquired at 220 and an abnormal result in the map data and the sensing data is identified based on the matching result. In some embodiments, the abnormal boundary may include a false positive boundary and a false negative boundary (i.e., false detections and missed detections, which may be present in the map data or in the sensing data). In the example in FIG. 1B, for example, the map boundaries m2-1-1 and m3-1-1 match the sensing boundary p2, and m1-1-1, m2-1-2, and m3-1-2 match the sensing boundary P3.

The method 200 for lane fusion according to embodiments of the present disclosure enables matching between map data and sensing data having different data structures or representations, and can identify abnormal boundaries that may be present in the map data and the sensing data based on the matching results. These boundaries may represent unrecorded new obstructions, road construction areas, or changes in road conditions due to weather or time change. By identifying these abnormal situations in a timely manner, it is possible to promote rapid adjustment of vehicle driving strategies, avoid potential dangers, and ensure driving safety.

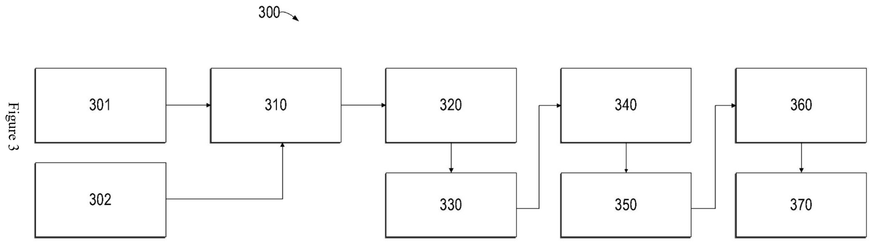

FIG. 3 illustrates a diagram of a lane fusion process 300 according to embodiments of the present disclosure. As exemplified in FIG. 3, a lane fusion process 300 may include a data preprocessing sub-process 310, a similarity determination sub-process 320, a boundary topology construction sub-process 330, a conflict filtering sub-process 340, an anomaly filtering sub-process 350, a confidence assignment sub-process 360, and an optimization sub-process 370. The lane fusion process 300 and its sub-processes may be abstracted as a lane fusion unit and corresponding sub-units for each sub-process (e.g., a similarity determination sub-unit, a boundary topology construction sub-unit, etc.). These units and sub-units may be software-based components or systems implemented to determine object locations and may be run on devices with computing capabilities (e.g., in-vehicle computing devices).

According to an embodiment of the present disclosure, at the data preprocessing sub-process 310, data preprocessing may be performed on map data 301 and sensing data 302. As noted above, the lane boundary of the target road section may be represented using a data structure. The lane boundary of the map data may be represented using the out-of-bounds boundary according to an embodiment of the present disclosure. A data structure such as an out-of-bounds boundary can process the boundary of one side of the lane in the map data corresponding to the target road section as a whole unit to facilitate alignment with the lane boundary of the sensing data. Other data structures that can be characterized are also possible.

Referring back to FIG. 1B, pl is shown as an unmatched sensing boundary, p2 matches m2-1-1 and m3-1-1, p3 matches m1-1-1, m2-1-2 and m3-1-2, and m1-1-2, m2-2-2 and m3-2-2 are unmatched map boundaries. Here, the matching relationships are 1:0 (no map boundary matches the sensing boundary), 0:1 (no sensing boundary matches the map boundary), and 1:n (one sensing boundary matches a plurality of map boundaries).

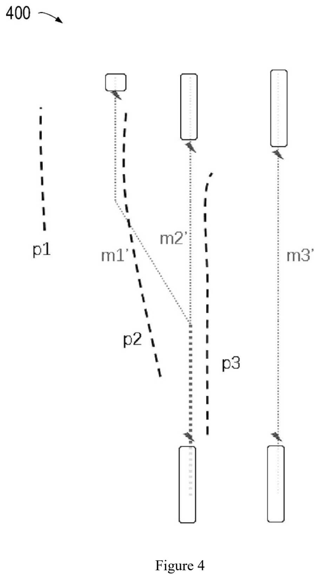

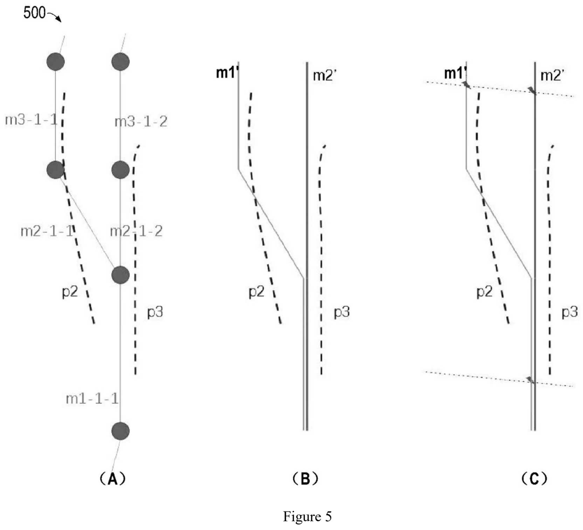

The data preprocessing sub-process 310 is configured to convert a 1:n matching relationship to a 1:1 matching relationship without changing the original map data structure. Using the out-of-bounds boundary, the boundary matching relationship of the original 1:n becomes a boundary matching relationship of 1:1. FIG. 4 illustrates a diagram of an example data representation 400 utilizing out-of-bounds boundary map data and sensing data according to embodiments of the present disclosure. At this time, the out-of-bounds boundary m1' = m1-1-1 + m2-1-1 + m3-1-1, m2' = m1-1-1 + m2-1-2 + m3-1-2, m3' = m1-1-2 + m2-2-2 + m3-2-2. In this way, the matching relationship between the map boundary and the sensing boundary based on the out-of-bounds boundary can be converted into 1:0, 0:1, and 1:1. The processing of the map data and the acquisition of the out-of-bounds boundary will be described in detail below in connection with FIG. 5.

In some embodiments, it is possible to search the target road section corresponding to the lane boundary (also referred to simply as the sensing boundary) of the sensing data in the map data. Generally, a map is a large-scale (hundreds of kilometers) data representation, but the region of interest (ROI) for an automobile is a relatively small area (approximately a few hundred meters). In order to save computing power, it is necessary to search for the target road section and filter out uninterested parts. In some embodiments, the target road section corresponding to the sensing boundary may be a first road section that overlaps the sensing boundary. Alternatively, or additionally, a target road section corresponding to the sensing border may be a predetermined number of second road sections upstream and downstream of the first road section, based on the first road section described above.

FIG. 5 illustrates a diagram of a process for out-of-bounds boundary acquisition 500 according to embodiments of the present disclosure. As shown in (A) in FIG. 5, the road section in the ROI is m1-m2-m3, and the previous road section and the latter road section will not be used in the lane fusion frame. In some embodiments, in order to search for a road section in the ROI, a breadth-first search algorithm may be used, for example, with a starting search point being the farthest location that can be perceived from behind the vehicle. The road topology may then be traversed in the driving direction until the last road section intersecting with the perceived result is reached. As shown in the figure, starting from the road section m1, the lane topology is traversed as: m1-m2-m3-m4 ..., and ends at the road section m3.

In some embodiments, in response to a distance between a first boundary and a second boundary (i.e., a preceding boundary and a succeeding boundary) in a vehicle travel direction of the searched target road section being less than a first distance threshold, the first boundary and the second boundary may be spliced. In this way, discrete and irrelevant map boundaries can be spliced to form an out-of-bounds boundary. An out-of-bounds boundary may be defined as a set of boundaries connected end to end. To this end, a lane topology can be converted to a boundary topology (most of the original map data only provides a lane topology). (B) of FIG. 5 shows such a boundary topology.

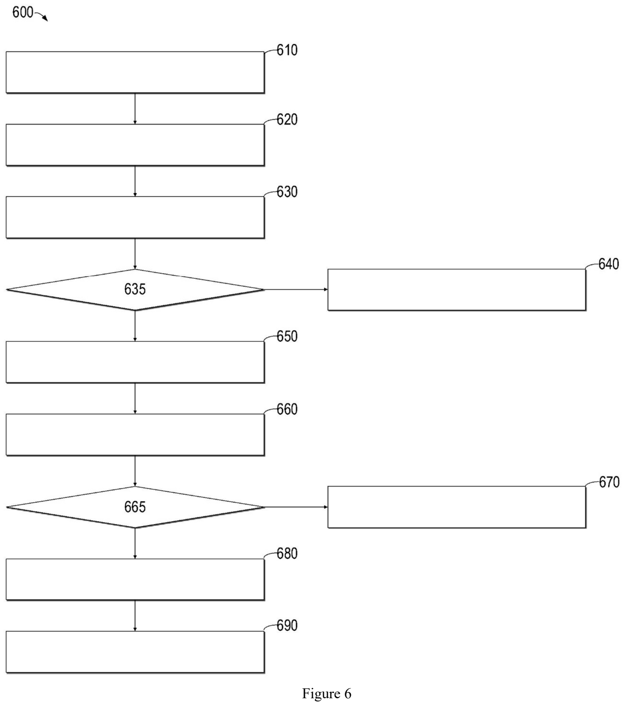

In (B) of FIG. 5, the succeeding lanes of lane m1-1 are m2-1 and m2-2, but it is not possible to know which boundary is the succeeding boundary of m1-1-1. To effectively identify boundaries, FIG. 6 illustrates a schematic diagram of an example boundary topology process 600 according to embodiments of the present disclosure. At 610, a given boundary Bi is identified and at 620, the boundary Bi is determined to belong to a corresponding lane Li. At 630, a succeeding lane S-Li is determined. At 630, it is determined whether there is a succeeding lane S-Li. In response to the absence of the succeeding lane S-Li, the process proceeds to 640 to update the boundary topology, and in response to the presence of the succeeding lane S-Li, the process proceeds to 650 to acquire a boundary B-S-Li of the succeeding lane S-Li. At 660, the degree of proximity of the boundary Bj from B-S-Li to the given boundary Bi is determined.

In some embodiments, a predetermined distance threshold is used to determine whether two boundaries are connected end to end. For example, if the Euclidean distance between the start point of BB2 and the end point of B1 is less than 0.5 m, then B2 will be set as the succeeding boundary of B1. At 665, it is determined whether the boundary Bj from B-S-Li is close to the given boundary Bi. In response to the boundary Bj from B-S-Li not close to the given boundary Bi, the process proceeds to 670 to update the boundary topology, and in response to the boundary Bj from B-S-Li close to the given boundary Bi, the process proceeds to 680 to determine the boundary Bj as one of the succeeding boundaries of the boundary Bi. At 690, the boundary topology is registered. In (B) of FIG. 5, the boundary m1-1-1 appears repeatedly in two out-of-bounds boundaries, which is consistent with the proposed matching relationship. The reason is that during the preprocessing step, it is not possible to predict whether m1-1-1 will match p2 or p3 in advance. Both possibilities can be retained and further judgment can be made in the subsequent filtering process.

In some embodiments, in response to a total length of the searched target road section being greater than a second distance threshold, a portion of the searched target road section exceeding the second distance threshold is cropped to form a minimum envelope polygon. Suppose some road sections are very long (e.g., greater than 1km) but it is not desired to process the entire road section in the subsequent process. Accordingly, a portion of the road section may be cropped, as shown in (C) of FIG. 5, and the sensed lane boundaries (e.g., p2 and p3) form a minimum envelope polygon, and the intersection of the polygon and the map boundary will be used as a cropping point.

Returning to FIG. 3, at the similarity determination sub-process 320, the similarity between the out-of-bounds boundary of the map data and the sensing boundary of the sensing data can be determined, and at the boundary topology construction sub-process 330, a boundary topology indicating a matching relationship between the out-of-bounds boundary and the sensing boundary can be constructed based on the determined similarity. It will be understood that the following description will be based on distance similarity, which is one of numerous implementations of embodiments of the present disclosure. For example, shape similarity and direction consistency may also be utilized to construct a boundary topology indicating the match relationship between the out-of-bounds boundary and the sensing boundary, and graph theory algorithms and spatial matching algorithms other than similarity are also possible. According to an embodiment of the present disclosure, a point distance between a sample point on the out-of-bounds boundary and a nearest point on the sensing boundary can be calculated, and a boundary distance between the out-of-bounds boundary and the sensing boundary can be obtained by weighting the calculated point distance. The similarity between each possible match is calculated, and the nearest two points on the sensing boundary are found and their distance is calculated for each sample point on the map out-of-bounds boundary. All distances are weighted with weights to obtain the boundary distance. Formula (1) below exemplifies the calculation process.

$$dist_{bdry}^{bdry} = \frac{\sum(dist_{node}^{bdry} * weight)}{\sum weight} \qquad (1)$$

where $dist_{bdry}^{bdry}$ indicates the distance between boundaries, $dist_{node}^{bdry}$ indicates the point distance, weight indicates corresponding weight, and $\Sigma$ *weight* indicates the sum of weights.

According to an embodiment of the present disclosure, the boundary topology construction sub-process 330 may be configured to create a start node and an end node, and to create an out-of-bounds node corresponding to each out-of-bounds boundary and a sensing boundary node corresponding to each sensing boundary, wherein the start node and the end node. Furthermore, the out-of-bounds boundary node having a minimum node distance and the sensing boundary node are matched together based on the node distance indicating the boundary distance.

Based on the out-of-bounds boundary, and the similarity between possible matching pairs of the out-of-bounds boundary and the sensing boundary according to embodiments of the present disclosure, a topological may be further constructed to calculate the best matching result to convert this issue to a minimum cost flow optimization problem. The minimum cost flow optimization problem is to determine where the flow passes through the flow network map at the minimum cost, where the flow on the side cannot exceed the capacity of the side. Each out-of-bounds boundary and each boundary in the map boundary M = {m1', m2', ..., mi} (i=1, 2, ...,n) and the sensing boundary P = {p1, p2, ..., pj} (j = 1, 2, ..., m) is represented as a node in the boundary topology. The side (m, p)∈E in the figure indicates a possible matching pair. In some embodiments, a starting point s and an end point t may be created virtually, and the cost (capacity) for each side may be: i. c(s, mi)(i = 1, 2, ..., n) = 0; ii. c(pj, t)(j = 1, 2, ..., m) = 0; iii. c(mi, pj) = dist(mi, pj).

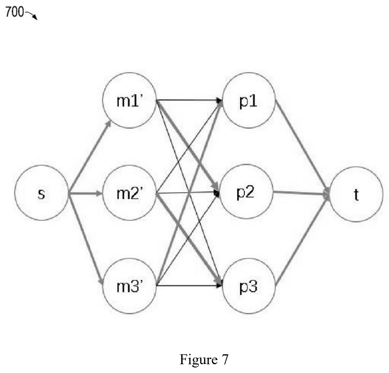

FIG. 7 illustrates a schematic diagram of a constructed boundary topology 700 according to embodiments of the present disclosure. **In** this example, mI' matches p2, m2' matches p3. However, p1 matches m3', which does not appear to be reasonable. In some embodiments, in response to a boundary distance between a first out-of-bounds boundary and a first sensing boundary that are unmatched being greater than a third distance threshold corresponding to a lane width, the first out-of-bounds boundary is matched with the first sensing boundary as an abnormal match. The third distance threshold here is the maximum threshold for matching candidates, e.g., the average Euclidean distance is greater than a lane (e.g., 3.75 m). Through this threshold, it is possible to handle the problems of mismatches. As shown in Figure 7, if the maximum distance is not set, the minimum cost flow may give incorrect matching results, e.g., m1':p1, m2':p2; m3':p3.

According to an embodiment of the present disclosure, a match result between the out-of-bounds boundary and the sensing boundary can be obtained by filtering out an abnormal match between the out-of-bounds boundary and the sensing boundary. In some embodiments, the conflict filtering sub-process 340 may be configured to, in response to a second out-of-bounds boundary matching with a plurality of second sensing boundaries, retain the match between one second sensing boundary having a minimum boundary distance from the second out-of-bounds boundary while deleting matches with other second sensing boundaries. Further, the anomaly filtering sub-process 350 may be configured to delete a pre-match between the third out-of-bounds boundary and the third sensing boundary in response to the boundary distance between the matched third out-of-bounds boundary and the third sensing boundary being greater than a third distance threshold. In this way, duplicate matches and apparent mismatches will be filtered out, and the filtered results can be fed to the confidence assignment sub-process 360 and the optimization sub-process 370 for further operations. The confidence assignment process will be described in further detail below.

As previously noted, the original map boundary m1-1-1 matches the sensing boundaries p1 and p2 at the same time, which conflicts with expectations. Therefore, duplicate matches needs to be filtered. The conflict filtering processes according to embodiments of the present disclosure does not necessarily require traversing all map boundaries. The boundary topology already stores all possible re-observed boundaries during the preprocessing phase. For example, the boundary m1-1-1 has two succeeding boundaries, m2-1-1 and m2-2-1, so the boundary m1-1-1 can be re-observed. All such boundaries will be traversed in the conflict filtering sub-process 340 to check if it generates multiple out-of-bounds boundaries and if there is a possible matching pair with the sensing boundary. In this case, the best match is selected from all possibilities and other matches are deleted. Further, the anomaly filtering process according to embodiments of the present disclosure filters out all unreasonable matching results, such as all matching pairs having distances greater than a maximum threshold, such as p1:m3'. A true distance of these matches will be recalculated and will be deleted if it exceeds a reasonable error range.

As noted above, a single input has limitations in a complex traffic environment and may cause instability and errors. The lane fusion process 300 according to embodiments of the present disclosure is capable of incorporating multi-modal sensing data from a plurality of sensors. The sensing data may include first sensing data from a first sensor and second sensing data from a second sensor. According to an embodiment of the present disclosure, a first fusion may be performed based on a first match between the map data and the first sensing data, and a second fusion may be performed based on a second match between the map data and the second sensing data. The fusion results of the first fusion and the second fusion may then be adjusted separately (e.g., to correct deviated fusion results, to verify sensed entities, etc.).

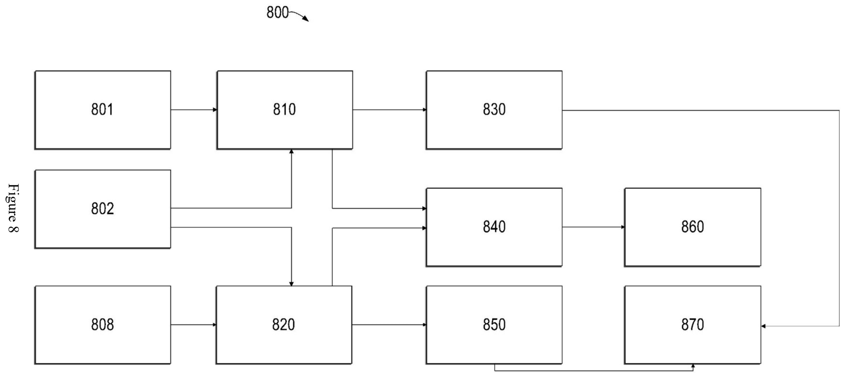

FIG. 8 illustrates a schematic diagram of a multi-modal fusion process 800 according to embodiments of the present disclosure, where a first fusion 830 may be performed based on a first match 810 between first sensing data 801 from a first sensor and map data 802, and a second fusion 850 may be performed based on a second match 820 between second sensing data 803 from a second sensor and the map data 802. The results of the first fusions 830 and the second fusion 850 may be fine-tuned and fused 870, and a multi-modal confidence assignment 540 may be performed based on the first fusion 830 and the second fusion 850 to estimate a state 560.

According to an embodiment of the present disclosure, a matching result for each mode may be considered a hash table. The hash function h maps the set of map boundaries U->{m1-1-1, m1-1-2, ...} to in-table array index for a given sensing boundary $h(x) \in p1, p2, p3....$ Note that another set can be retained to save all unmatched perception boundaries. Assume there are multiple matching results, for example, there are two hash tables, ha, ha$\in$pa1, pa2, pa3, ...}, and hb, hb$\in$ pb1, pb2, pb3, ...}. Since the keys of both hash tables belong to the original set of map boundaries, the two hash tables can be merged. The merged hash function maps the U->{m1-1-1, m1-1-2,...} of the map boundary to two perception results, e.g., h(m1-1-1) = pa1, pb2}.

The validation state estimation for the boundary may be considered as a Kalman filtering issue. The following equation (2) shows a state equation:

$$x(k+1)=F(k)x(k)+G(k)u(k)+w(k) \qquad (2)$$

wherein X(k) indicates a validation state of a certain boundary at time k, f(k) indicates a state transfer matrix, u(k) indicates an input vector, G(k) indicates an input matrix, describing an impact of u(k) on x(k), and w(k) indicates a process noise vector.

Equation (3) shows the state equation:

$$z(k)=H(k)x(k)+v(k) \qquad (3)$$

wherein z(k) indicates an observed state at time k, i.e., the matching result at time k. H(k) indicates an observation matrix, and v(k) indicates an observed noise vector.

Equation (4) shows a state estimation equation:

$$x(k|k)=x(k|k-1)+K(k)[z(k)-H(k)x(k|k-1)] \qquad (4)$$

wherein $K(k)$ indicates a Kalman gain.

Equation (5) shows a state prediction equation:

$$x(k+1|k)=F(k)x(k|k)+G(k)u(k) \qquad (5)$$

According to an embodiment of the present disclosure, a confidence score may be assigned to the map data, the first sensing data, or the second sensing data, based on the first match 810 between the first sensing data 801 from the first sensor and the map data 802 and the second match 820 between the second sensing data from the second sensor 803 and the map data 802.

In some embodiments, the abnormal boundary may include a false negative boundary. In response to a fourth sensing boundary from the first sensing data and a fifth sensing boundary from the second sensing data associated with the fourth boundary not matching any out-of-bounds boundary, a high confidence score may be assigned to the presence of a false negative boundary in the map data at locations of the fourth sensing boundary and the fifth sensing boundary. In an exemplary and non-limiting manner, the fourth sensing boundary may be associated with the fifth sensing boundary because the fourth sensing boundary and the fifth sensing boundary have the same or similar position, shape, trend, etc. Further, in response to a fourth out-of-bounds boundary matching only with a sixth sensing boundary of the first sensing data or the second sensing data, a high confidence score may be assigned to the presence of a false negative boundary in unmatched sensing data at locations of the fourth out-of-bounds boundary and the sixth sensing boundary.

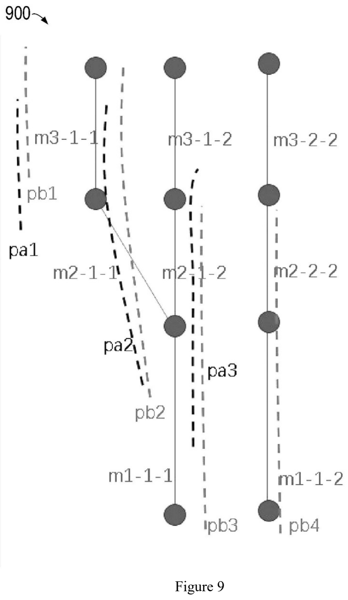

FIG. 9 illustrates a schematic diagram of an abnormal boundary identification process 900 based on multi-modal sensing data according to embodiments of the present disclosure. Abnormal boundaries, including false positive boundaries and false negative boundaries, can be identified based on multi-modal sensing data and map data. First, all unmatched perception boundaries can be examined. In the case of FIG. 9, the system has two sensor sensing results, where pa1 and pb1 do not match. As shown in FIG. 9, there is no map boundary or out-of-bounds boundary matched to the locations of pa1 and pb1. Thus, a high confidence score may be given when "the map data has a false negative boundary at the locations of pa1 and pb1." Further, at m1-1-2 and m2-2-2, only pb4 from one sensor matches. Thus, a high confidence score may be given when "the other sensor has a false negative boundary located at pb4, and at m1-1-2 and m2-2-2."

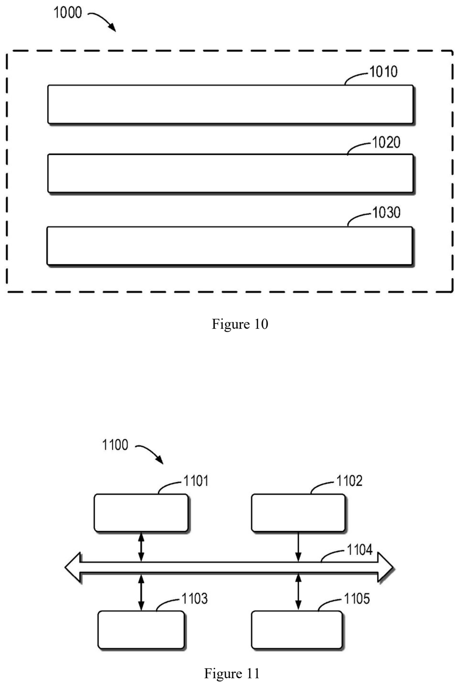

FIG. 10 shows a schematic diagram of an apparatus 1000 for lane fusion according to embodiments of the present disclosure. The apparatus 1000 may comprise multiple units or modules for performing corresponding steps in the method 200 as discussed in FIG. 2. As shown in FIG. 10, the apparatus 1000 includes a map boundary determination module 1010 configured to determine a map boundary of at least one lane corresponding to a target road section based on the map data. The apparatus further comprises a sensing boundary acquisition module 1020 configured to acquire a sensing boundary for the at least one lane based on the sensing data from the at least one sensor. The apparatus further comprises a boundary matching module 1030 configured to identify an abnormal boundary of the target road section based on a match of the map boundary to the sensing boundary.

In some embodiments, the map boundary is indicated by an out-of-bounds boundary of a map boundary on one side of the at least one lane corresponding to the target road section, the out-of-bounds boundary being acquired by at least one of the following: searching for a target road section corresponding to the sensing boundary in the map data, the map data including a road section, a lane, and a boundary; in response to a distance between a first boundary and a second boundary in a vehicle travel direction of the searched target road section being less than a first distance threshold, splicing the first boundary with the second boundary; or in response to a total length of the searched target road section being greater than a second distance threshold, cropping a portion of the searched target road section that exceeds the second distance threshold to form a minimum envelope polygon.

In some embodiments, the target road section corresponding to the sensing boundary includes at least one of: a first road section that overlaps the sensing boundary; or a predetermined number of second road sections upstream and downstream of the first road section.

In some embodiments, the match of the map boundary to the sensing boundary comprises: determining a similarity between an out-of-bounds boundary of the map data and the sensing boundary of the sensing data; and constructing a boundary topology indicating a matching relationship between the out-of-bounds boundary and the sensing boundary based on the calculated similarity.

In some embodiments, determining the similarity comprises: determining a point distance between a sample point on the out-of-bounds boundary and a nearest point on the sensing boundary; and obtaining a boundary distance between the out-of-bounds boundary and the sensing boundary by weighting the determined point distance.

In some embodiments, a boundary topology module is further included and is configured to: create a start node and an end node; create an out-of-bounds node corresponding to each out-of-bounds boundary, and a sensing boundary node corresponding to each sensing boundary; and match the out-of-bounds node having a minimum node distance and the sensing boundary node based on a node distance indicating a boundary distance.

In some embodiments, the boundary topology module is further configured to: in response to a boundary distance between a first out-of-bounds boundary and a first sensing boundary that are unmatched being greater than a third distance threshold corresponding to a lane width, pre-match the first out-of-bounds boundary with the first sensing boundary as an abnormal match.

In some embodiments, a filter module is further included and is configured to: obtain a match result between the out-of-bounds boundary and the sensing boundary by filtering out an abnormal match between the out-of-bounds boundary and the sensing boundary.

In some embodiments, filtering out the abnormal match comprises: in response to a second out-of-bounds boundary matching with a plurality of second sensing boundaries, retaining a match between one second sensing boundary having a minimum boundary distance to the second out-of-bounds boundary; and in response to a boundary distance between a third out-of-bounds boundary and a third sensing boundary that have been matched being greater than the third distance threshold, deleting a pre-match between the third out-of-bounds boundary and the third sensing boundary.

In some embodiments, the sensing data includes first sensing data from a first sensor and second sensing data from a second sensor, and a fusion module is further included and is configured to: perform a first fusion based on a first match of the map data with the first sensing data; perform a second fusion based on a second match of the map data with the second sensing data; and perform an adjustment on fusion results of the first fusion and the second fusion, respectively.

In some embodiments, a confidence assignment module is further included and is configured to: assign a confidence score for the map data, the first sensing data, or the second sensing data based on the first match and the second match.

In some embodiments, the abnormal boundary comprises a false negative boundary, and identifying the abnormal boundary comprises: in response to a fourth sensing boundary and an associated fifth sensing boundary not matching any out-of-bounds boundaries, assigning a high confidence score to a presence of a false negative boundary in the map data at locations of the fourth sensing boundary and the fifth sensing boundary; and in response to a fourth out-of-bounds boundary matching only with a sixth sensing boundary of the first sensing data or the second sensing data, assigning a high confidence score to a presence of a false negative boundary in unmatched sensing data at locations of the fourth out-of-bounds boundary and the sixth sensing boundary.

FIG. 11 illustrates a schematic block diagram of an exemplary device 1100 suitable for implementing the examples of the present disclosure. The above-mentioned controller can be implemented using the device 1100. As shown in the drawing, the device 1100 comprises a processor 1101, which can perform various appropriate actions and processes according to computer program instructions stored in a read only memory (ROM) 1102 and loaded into a random access memory (RAM) 1103. Various programs and data required for the operation of the device 1100 may also be stored in the RAM 1103. The processor 1101, the ROM 1102, and the RAM 1103 are interconnected through a bus 1104. An input/output (I/O) interface 1105 is also connected to the bus 1104.

The various processes and processing described above, such as the method 200 and other processes, may be executed by the processor 1101. For example, in some examples, the method 200 and other processes can be implemented as a computer software program tangibly contained in a machine-readable medium. In some embodiments, portions or all of the computer program can be loaded and/or installed onto the device 1100 via ROM 1102. When the computer program is loaded onto the RAM 1103 and executed by the processor 1101, one or more actions of the method 200 and other processes described above may be performed. According to an example of the present disclosure, provided is a vehicle that can include the device 1100 as described above for performing various aspects of the present disclosure.

The present disclosure may be a method, an apparatus, an electronics device, a vehicle, a computer-readable storage medium, and/or a computer program product. The computer program product may comprise a computer-readable storage medium loaded with computer-readable program instructions for performing various aspects of the present disclosure.

The computer-readable storage medium may be a tangible device that can maintain and store instructions used by an instruction execution device. The computer-readable storage medium, for example, may be - but is not limited to - an electrical storage device, a magnetic storage device, an optical storage device, an electromagnetic storage device, a semiconductor memory device, or any suitable combination of the above. More specific examples (a non-exhaustive list) of the computer-readable storage medium comprise: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoding device, such as a punch card and a protrusion structure in grooves with instructions stored thereon, as well as any suitable combinations of the above. The computer-readable storage medium used herein is not to be construed as transient signals per se, such as radio waves or other freely propagating electromagnetic waves, electromagnetic waves propagating through waveguides or other transmission media (e.g.,

light pulses through fiber optic cables), or electrical signals transmitted through wires.

The computer-readable program instructions described herein can be downloaded to respective computing/-processing devices from a computer-readable storage medium or to an external computer or external storage device via a network, for example, the Internet, a local area network, a wide area network, and/or a wireless network. The network can comprise copper transmission cables, fiber optic transmission, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

The computer program instructions for performing operations of the present disclosure can be assembly instructions, instruction set architecture (ISA) instructions, machine instructions, machine-dependent instructions, microcode, firmware instructions, state-setting data, or source code or object code written in any combination of one or more programming languages, wherein the programming languages comprise object-oriented programming languages-such as Smalltalk and C++, and conventional procedural programming languages-such as the "C" programming language or similar programming languages. Computer-readable program instructions may be fully executed on a user's computer, partially executed on a user's computer, executed as an independent software package, partially executed on a user's computer and partially executed on a remote computer, or fully executed on a remote computer or server. In the case of remote computers, the remote computer can be connected to the user's computer through any type of network-including a local area network (LAN) or a wide area network (WAN), or can be connected to an external computer (for example, through the Internet using an Internet Service Provider). In some examples, the state information of computer-readable program instructions is used to personalize custom electronic circuits, such as a programmable logic circuit, field-programmable gate array (FPGA) or programmable logic array (PLA), where the electronic circuit is able to execute computer-readable program instructions, thereby achieving the various aspects of the present disclosure.

Various aspects of the present disclosure are described herein with reference to flowcharts and/or block diagrams of methods, devices (systems), and computer program products according to embodiments of the present disclosure. It should be understood that each block of the flowcharts and/or block diagrams, as well as combinations of blocks in the flowcharts and/or block diagrams, can be implemented by computer-readable program instructions.

These computer-readable program instructions may be provided to general-purpose computers, dedicated computers or the processing units of other programmable data processing devices, thereby producing a type of machine, such that when these instructions are executed by the computers or processing units of other programmable data processing devices, an apparatus that realizes the functions/actions stipulated in one or more boxes in the flow charts and/or block diagrams is produced. These computer-readable program instructions may also be stored on a computer-readable storage medium, which can cause a computer, programmable data processing apparatus, and/or other devices to function in a particular manner. Accordingly, a computer-readable medium storing the instructions constitutes an article of manufacture that includes instructions for implementing various aspects of the functions/actions specified in one or more blocks of the flowcharts and/or block diagrams.

The computer-readable program instructions may also be loaded onto a computer, other programmable data processing devices, or other devices, enabling a series of operational steps to be executed on the computer, other programmable data processing devices, or other devices to generate a computer-implemented process. This enables the instructions executed on the computer, other programmable data processing devices, or other devices to implement the functions/actions specified in one or more boxes in the flow charts and/or block diagrams.

The flowcharts and block diagrams in the accompanying drawings illustrate possible system architectures, functionalities, and operations for systems, methods, and computer program products according to multiple embodiments of the present disclosure. Regarding this, every block in the flow charts or block diagrams can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner and they may also sometimes be performed in a reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The above description of the various embodiments of the present disclosure is exemplary and not intended to be exhaustive or limited to the disclosed embodiments. Many modifications and variations will be apparent to those of ordinary skill in the art without departing from the scope and spirit of the described embodiments. The selection of terms used in the present description aims to best explain the principles and actual application of the various examples, the technological improvements in the technology in the market, or allow others of ordinary skill in the art to understand the various examples disclosed in the present description.

**Claims**

1. A method (200) for lane fusion, comprising:

    determining (210) a map boundary of at least one lane corresponding to a target road section based on map data;
    obtaining (220) a sensing boundary for the at least one lane based on sensing data from at least one sensor; and
    identifying (230) an abnormal boundary of the target road section based on a match of the map boundary to the sensing boundary.

2. The method (200) according to claim 1, wherein the map boundary is indicated by an out-of-bounds boundary of a map boundary on one side of the at least one lane corresponding to the target road section, the method comprising:

    searching for a target road section corresponding to the sensing boundary in the map data, the map data including a road section, a lane, and a boundary;
    the out-of-bounds boundary acquired by at least one of the following:

        in response to a distance between a first boundary and a second boundary in a vehicle travel direction of the searched target road section being less than a first distance threshold, forming the out-of-bounds boundary by splicing the first boundary with the second boundary;
        in response to a total length of the searched target road section being greater than a second distance threshold, forming the out-of-bounds boundary by cropping a portion of the searched target road section that exceeds the second distance threshold.

3. The method (200) according to claim 2, wherein the target road section corresponding to the sensing boundary comprises at least one of:

    a first road section overlapping the sensing boundary; or
    a predetermined number of second road sections upstream and downstream of the first road section.

4. The method (200) according to claim 1, wherein the match of the map boundary to the sensing boundary comprises:

    determining a similarity between an out-of-bounds boundary of the map data and the sensing boundary of the sensing data; and
    constructing a boundary topology indicating a matching relationship between the out-of-bounds boundary and the sensing boundary based on the calculated similarity.

5. The method (200) according to claim 4, wherein determining the similarity comprises:

    determining a point distance between a sample point on the out-of-bounds boundary and a nearest point on the sensing boundary; and
    obtaining a boundary distance between the out-of-bounds boundary and the sensing boundary by weighting the determined point distance.

6. The method (200) according to claim 4, wherein the boundary topology is constructed by:

    creating a start node and an end node;
    creating an out-of-bounds node corresponding to each out-of-bounds boundary, and a sensing boundary node corresponding to each sensing boundary; and
    matching the out-of-bounds node having a minimum node distance and the sensing boundary node based on a node distance indicating a boundary distance between the out-of-bounds boundary and the sensing boundary.

7. The method (200) according to claim 6, further comprising: in response to a boundary distance between a first out-of-bounds boundary and a first sensing boundary that are unmatched being greater than a third distance threshold corresponding to a lane width, pre-matching the first out-of-bounds boundary with the first sensing boundary as an abnormal match.

8. The method (200) according to claim 7, further comprising:
    obtaining a match result between the out-of-bounds boundary and the sensing boundary by filtering out an abnormal match between the out-of-bounds boundary and the sensing boundary.

9.  The method (200) according to claim 8, wherein filtering out the abnormal match comprises:

    in response to a second out-of-bounds boundary matching with a plurality of second sensing boundaries, retaining a match between one second sensing boundary having a minimum boundary distance to the second out-of-bounds boundary; and
    in response to a boundary distance between a third out-of-bounds boundary and a third sensing boundary that have been matched being greater than the third distance threshold, deleting a pre-match between the third out-of-bounds boundary and the third sensing boundary.

10. The method (200) according to claim 1, wherein the sensing data comprises first sensing data from a first sensor and second sensing data from a second sensor, the method (200) further comprising:

    performing a first fusion based on a first match of the map data with the first sensing data;
    performing a second fusion based on a second match of the map data with the second sensing data; and
    performing an adjustment on fusion results of the first fusion and the second fusion, respectively.

11. The method (200) according to claim 10, further comprising:
    assigning a confidence score for the map data, the first sensing data, or the second sensing data based on the first match and the second match.

12. The method (200) according to claim 11, wherein the abnormal boundary includes a false negative boundary, and identifying the abnormal boundary comprises:

    in response to a fourth sensing boundary from the first sensing data and a fifth sensing boundary associated with the fourth sensing boundary from the second sensing data not matching any out-of-bounds boundaries, assigning a high confidence score to a presence of a false negative boundary in the map data at locations of the fourth sensing boundary and the fifth sensing boundary; and
    in response to a fourth out-of-bounds boundary matching only with a sixth sensing boundary from the first sensing data or the second sensing data, assigning a high confidence score to a presence of a false negative boundary in unmatched sensing data at locations of the fourth out-of-bounds boundary and the sixth sensing boundary.

13. An apparatus (1000) for lane fusion, comprising:

    a map boundary determination module (1010) configured to determine a map boundary of at least one lane corresponding to a target road section based on map data;
    a sensing boundary acquisition module (1020) configured to acquire a sensing boundary for the at least one lane based on the sensing data from at least one sensor; and
    a boundary matching module (1030) configured to identify an abnormal boundary of the target road section based on a match of the map boundary to the sensing boundary.

14. A controller (1100), comprising:

    at least one processor (1101); and
    a memory (1102) coupled to the at least one processor (1101) and having instructions stored thereon that, when executed by the at least one processor (1101), cause the controller (1100) to perform the method according to any one of claims 1 to 11.

15. A computer program product, the computer program product being tangibly stored on a computer-readable medium (1102) and comprising computer-executable instructions that, when executed by a processor (1101) of a computer, cause the computer to perform the method according to any one of claims 1 to 12.

100A

Figure 1

Figure 1B

Figure 2

Figure 3

Figure 4

Figure 5

Figure 6

700

Figure 7

Figure 8

Figure 9

1000

1010

1020

1030

Figure 10

1100

1101

1102

1104

1103

1105

Figure 11